(19) Europäisches Patentamt
European Patent Office
Office européen des brevets

(11) **EP 4 270 054 A1**

(12) **EUROPEAN PATENT APPLICATION**

(43) Date of publication:
**01.11.2023  Bulletin 2023/44**

(21) Application number: **22170767.2**

(22) Date of filing: **29.04.2022**

(51) International Patent Classification (IPC):
**G01S 13/34** (2006.01)  **G01S 13/87** (2006.01)
**G01S 7/41** (2006.01)  **G01S 13/931** (2020.01)
**G01S 13/60** (2006.01)

(52) Cooperative Patent Classification (CPC):
**G01S 13/343; G01S 13/60; G01S 13/872;
G01S 13/931**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Provizio Limited**
**V94 VY47 Limerick (IE)**

(72) Inventor: **Lunn, Barry**
**Limerick, V35 YA27 (IE)**

(74) Representative: **Purdylucey Intellectual Property
6-7 Harcourt Terrace
D02 FH73 Dublin 2 (IE)**

(54) **DYNAMIC RADAR DETECTION SETTING BASED ON THE HOST VEHICLE VELOCITY**

(57)     Disclosed is a radar control system that includes a processor configured to be operably coupled to one or more automotive radars for dynamically configuring radar detection range and range resolution of each automotive radar based on a velocity of corresponding host vehicle and a distance from a detected object, wherein each automotive radar is configured to perform long range detection along with short range detection with desired range and velocity resolution within regulated frequency bands.

FIG.7

**Description**

**Field**

The present invention relates to radar technology, and more specifically to dynamically setting the radar detection range in automotive electromagnetic wave radars.

**Background of Invention**

In radar technologies, a signal is radiated from the radar and the time taken for a reflected signal to be received back at the radar is used to determine where an object is. This is increasingly becoming more commonplace in present day motor vehicles and is used in applications such as advanced cruise control (ACC) and collision avoidance.

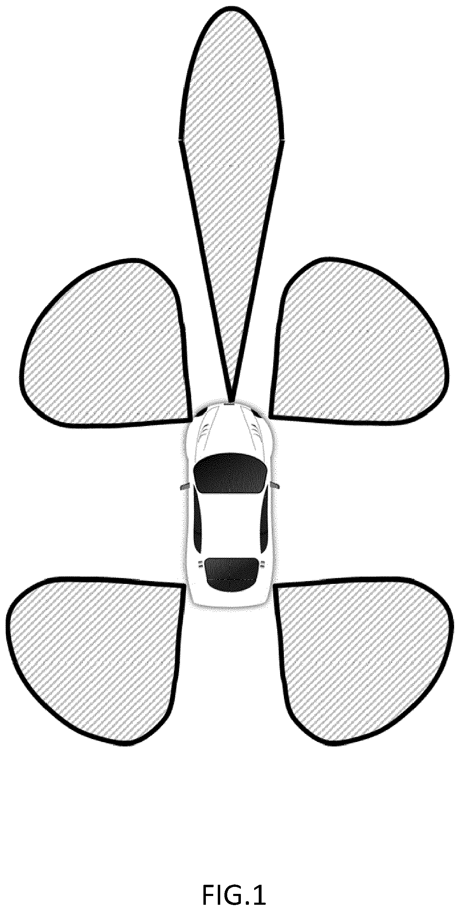

FIG.1 illustrates using multiple radar systems pointed in different directions for the detection of objects through the full 360-degree coverage of a car. The radar at the front of the car is configured for long range detections while those at the corners are configured in a short-range mode. For E-band automotive radar systems, the frequency of operation must lie within the 76-81GHz frequency band, although fractions of this may be used depending on the specific nature of the radar i.e., long range/medium range/short range etc. This large bandwidth presents a significant challenge for millimetre-wave system designers, as those familiar with the technology would appreciate the difficulty in ensuring that frequency invariant beam forming or the combination of transmitted/ received signals by the numerous transmitters/receivers within the radar unit does not degrade with the performance variation of the individual components over frequency. In some conventional methods, wideband beam forming is achieved by using filter banks, which work either in the time domain with two-dimensional filter banks, or in the frequency domain (after FFT) by filtering each band separately. In essence, the wideband signal is split into many sub-bands which are individually narrowband filtered and pre-defined in the system. Although this may not seem of much importance, it does however have a significant effect on the operation of the radar. If such a system is employed and the available bandwidth is reduced, the range resolution, or the minimum separation over distance between which different objects can be detected, would be adversely affected since it is known that:

$$Range\ Resolution = \frac{Speed\ of\ Light}{2*Frequency\ Bandwidth}\ldots\ldots\ldots\ldots(1)$$

Thus, when filter banks are used, the range resolution of the system is generally poor. The different range resolutions for typical frequency bandwidths are shown in the table below:

| Bandwidth | Range Resolution |
|-----------|------------------|
| 4 GHz | 3.75 cm |
| 2 GHz | 7.5 cm |
| 1 GHz | 15 cm |
| 600 MHz | 25 cm |

As the previous calculation shows, many detection properties rely on different radar setup configurations, and therefore a compromised radar setting is often chosen, where a mid-range distance and mid-range resolution is set. Existing prior art systems rely on inherent design, i.e., frequency and bandwidth of operation of a radar, which is configured before deployment, and may be incorrect for the situation or road conditions it is used in.

**SUMMARY OF INVENTION**

In an aspect of the present invention, there is provided a radar control system that includes a processor configured to be operably coupled to one or more automotive radars for dynamically configuring the radar detection range and range resolution of each automotive radar, based on the velocity of the corresponding host vehicle and a distance from a detected object, wherein each automotive radar is configured to perform long range detection along with short range detection with desired range and velocity resolution within regulated frequency bands.

In an aspect of the present invention, the range resolution (R) of an automotive radar is constantly changed in response to the velocity (V) of the host vehicle, and a distance d from the detected object based on the equation

$$R = f(V, d)$$

In an embodiment of the present invention, the processor is further configured to: generate a lookup table by calculating detection ranges based on one or more velocities of the host vehicle and safe stopping distances for corresponding one or more velocities; detect a velocity of the host vehicle; and set a range resolution and a detection range of each automotive radar based on the detected velocity and the lookup table.

In an embodiment of the present invention, each automotive radar is a millimeter wave radar, and includes one or more millimeter wave transmitters and receivers, a plurality of antenna elements, each containing at least one transmit or receive element.

In an embodiment of the present invention, the processor is configured to set each automotive radar on the host vehicle for short range mode when the host vehicle travels at a speed less than a first speed, set each automotive radar for medium range mode, when the vehicle travels between first and second speeds, and set each automotive radar for long range mode, when the vehicle travels at a speed greater than the second speed.

In an embodiment of the present invention, the processor is configured to reduce a maximum detection range and increase a range resolution of each automotive radar, when the host vehicle travels slowly in a congested environment.

In an embodiment of the present invention, the processor is configured to increase a maximum detection range and reduces a range resolution of each automotive radar, when the host vehicle travels speedily in an open environment.

In an embodiment of the present invention, the processor employs a machine learning based neural network for dynamically configuring radar detection range and range resolution of each automotive radar, and wherein the neural network is dynamically trained based on measured data and user feedback.

In an embodiment of the present invention, the processor is configured to detect the velocity of host vehicle from radar detections of static or stationary objects around the host vehicle.

In an embodiment of the present invention, the processor is configured to receive the velocity of the host vehicle from an odometer, or from a vehicle speed sensor (VSS) on the engine control module (ECM) of the vehicle.

In another aspect of the present invention, there is provided a method of operating an automotive radar that includes dynamically configuring radar detection range and range resolution of the automotive radar based on a velocity of corresponding host vehicle and a distance from the detected object, wherein the automotive radar is configured to perform long range detection along with short range detection with desired range and velocity resolution within regulated frequency bands.

In an embodiment of the present invention, the method includes generating a lookup table by calculating detection ranges based on one or more velocities of the host vehicle and safe stopping distances for corresponding one or more velocities; detecting a velocity of the host vehicle; and setting a range resolution and a detection range of the automotive radar based on the detected velocity and the lookup table.

In an embodiment of the present invention, the method includes setting the automotive radar on the host vehicle for short range mode when the host vehicle travels at a speed less than a first speed, setting the automotive radar for medium range mode, when the vehicle travels between first and second speeds, and setting the automotive radar for long range mode, when the vehicle travels at a speed greater than the second speed.

In an embodiment of the present invention, the method includes employing a machine learning based neural network for dynamically configuring radar detection range and range resolution of the automotive radar, and wherein the neural network is dynamically trained based on measured data and user feedback.

There is also provided a computer program comprising program instructions for causing a computer program to carry out the above method which may be embodied on a record medium, carrier signal or read-only memory.

Various embodiments of the present invention disclose a method of dynamically setting detection range, range resolution and velocity resolution of an automotive electromagnetic wave radar according to the vehicle speed, instead of configuring multiple radars differently before deployment. The radar configuration is adapted to the user's environment by monitoring the host vehicle's speed and using a simple form of machine learning.

The method of dynamically setting detection range, range resolution and velocity resolution of an automotive electromagnetic wave radar eliminates incorrect configuration of the automotive radar, removes the need of a deployer to estimate the best radar configuration to use, allows adaptability in automotive radar setups, reduces the amount of unimportant information gathered and presented to the driver, and reduces the number of sensors required i.e. short, medium and long range sensors due to use of a single dynamic range sensor.

## BRIEF DESCRIPTION OF DRAWINGS

The present invention will be more clearly understood from the following description of embodiments thereof, given by way of example only, with reference to the accompanying drawings, in which:-

FIG.1 illustrates a typical 360-degree radar coverage of a vehicle using one long range radar, and four short range radars;

FIG.2 illustrates transmitted and received FMCW radar chirps configured in a sawtooth formation;

FIG.3 illustrates the FMCW radar chirps, and the resulting range and velocity estimations performed using a 2D FFT;

FIG.4 illustrates how the change in slope of an FMCW sawtooth chirp can change a radar configuration for a given chirp time;

FIG.5 illustrates a cluttered urban environment best suited for a short-range radar and high range resolution;

FIG.6 illustrates an open or 'country' environment best suited for a long-range radar and low range resolution; and

FIG.7 illustrates a radar control system for dynamically configuring settings of one or more automotive radars, in accordance with an embodiment of the present invention.

## DETAILED DESCRIPTION OF THE DRAWINGS

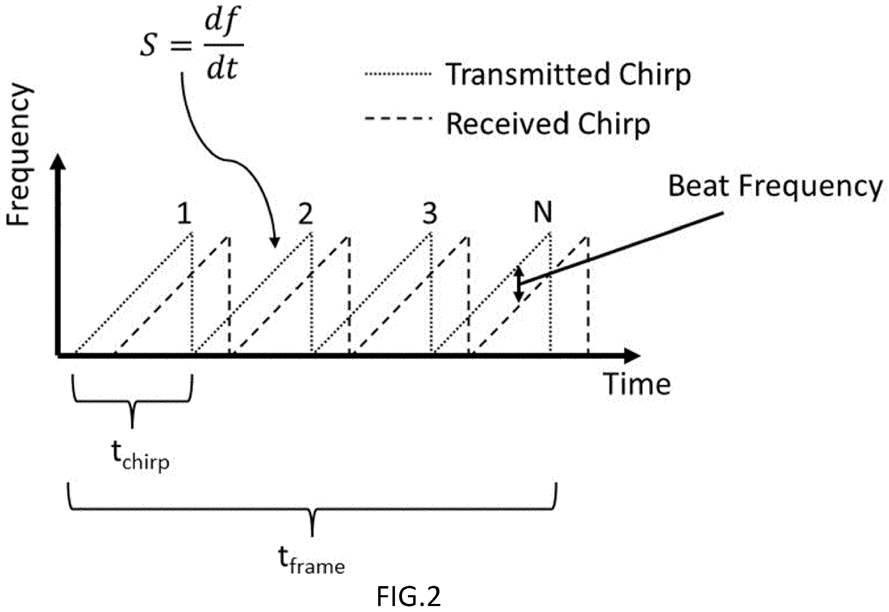

FIG.2 shows the transmitted and received Frequency Modulated Continuous Wave modulation (FMCW) radar chirps configured in a sawtooth formation for use in automotive radars, in accordance with an embodiment of the present invention. The FMCW waveform, also referred to as a chirp, is a complex sinusoidal waveform whose frequency increases linearly with time. The FMCW radars transmit chirps in a periodic fashion, at a period referred to as the pulse repetition interval (PRI) and most commonly in a sawtooth configuration, although other chirp types are available. The resulting target echo from the scene contains a delayed and attenuated copy of the transmitted chirp. A complex sinusoidal waveform can be obtained by mixing the received signal with the transmitted chirp. This waveform is known as the beat signal, and the frequency of the beat signal is proportional to the distance to the detected object. Thus, when the beat frequency is zero, the object is beside or touching the radar. Further, when the IF frequency is at a maximum value, the detection range is at a maximum. The bandwidth of the IF signal therefore, or more precisely the maximum IF frequency or pulse repetition frequency, is related to the maximum detection distance by:

$$f_{IF\_max} = \frac{2*S*d_{max}}{Speed\ of\ Light} \dots \dots \dots \dots \dots (1)$$

Where S (or slope) is the change in frequency over time of the chirp, and $d_{max}$ is the distance to the object or half the travelled distance of the reflected signal.

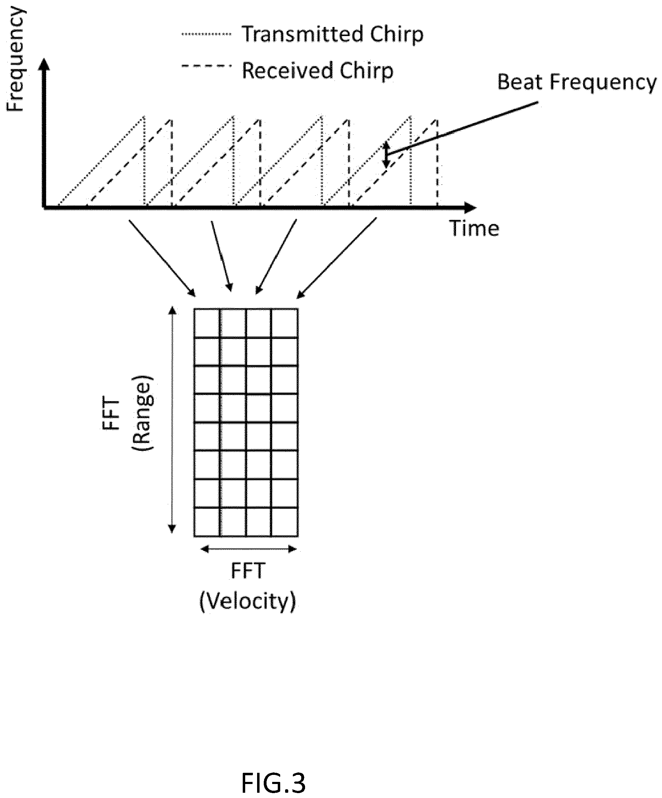

FIG. 3 shows the FMCW radar chirps, and a 2D FFT for estimating the range and velocity of an object. In FMCW modulation, estimation of the beat frequency is usually implemented in the digital domain, after the beat signal has been digitally sampled. Since the beat frequency is much smaller than the radar bandwidth, a low-speed analogue-to-digital converter (ADC) is used. By sampling the beat signal and placing the samples for each chirp into separate columns of a matrix or within a single 'frame', the row indices of the matrix correspond to the 'fast' time taken across a single chirp and the column indices correspond to the 'slow' time taken across multiple chirps. The range of the object may be determined through detection of the beat frequency by employing a Fast Fourier Transform (FFT) in each column of the matrix. Further, the velocity of the object may be determined through detection of the doppler frequency change, by applying a further FFT along the rows of the matrix. The use of these two FFTs is commonly named a 2D FFT, and allows objects to be determined in both range and velocity. A concomitant benefit of performing the 2D FFT is that it lowers the noise floor through matched filtering of the object's beat and doppler frequencies.

As previously stated, the maximum IF signal is dependent on the desired maximum distance, so the ADC rate and the filtering or windowing function are therefore important factors in this determination. Since the IF bandwidth is limited by the ADC sampling rate $f_s$, the maximum range equation shown previously can be rewritten in terms of $f_s$ as:

$$d_{max} = \frac{f_s*Speed\ of\ Light}{2*S} \dots \dots \dots \dots \dots \dots (2)$$

Thus, when a large chirp bandwidth is chosen, a better range resolution is obtained, whereas when a large IF bandwidth is chosen, a larger maximum distance can be detected. Thus, a delicate balance is often chosen for the range resolution requirement, which if set small is most effectively used in scenarios where many objects are nearby but has the negative result in a reduced maximum useable range of the radar, and if set large has an increased maximum useable range but loses effectiveness in the range resolution of the detections.

It is important to note that although this is the possible maximum distance that can be detected from this type of radar, the overall distance is also reliant on the intrinsic system performance as well. By using the prior art radar equation, the signal reflected by the object and received back at the radar is calculated as:

$$P_R = P_T G_T G_R \left[\frac{\lambda_{RF}^2}{(4\pi d_{max})^2}\right]\left[\frac{4\pi RCS}{\lambda_{RF}^2}\right]\left[\frac{\lambda_{RF}^2}{(4\pi d_{max})^2}\right]\dots\dots\dots(3)$$

where RCS is the radar cross section of the detected object and is a numerical value for signal that is reflected by it, $P_T$ is the transmitted power, $G_T$ is the transmit antenna gain, $G_R$ is the receive antenna gain and $\lambda_{RF}$ is the RF frequency wavelength.

To ensure that the signal can be detected, it must be somewhat higher than the noise in the receive band of the radar. In real terms, this received signal needs to be about 14 to 15 dB higher or nearly 29 times higher than the noise floor of the receiver, which can be calculated by:

$$Noise\ Level = \frac{K*T_O*BW}{N_S*W}\dots\dots\dots\dots\dots\dots\dots\dots\dots(4)$$

where K is Boltzmann's constant, $T_O$ is the temperature of the receiver system, BW is the detection bandwidth, Ns is the number of samples taken per chirp, and W is a constant depending on the type of windowing used. Thus, although the receiver settings may enable a long-range detection to take place, it may not be possible due to the radar system design or vice versa.

As previously stated, the velocity of the object can be determined by the change in doppler frequency, but the velocity parameter limitations are similarly dependent on the chirp settings as stated in the known equations:

$$Maximum\ Detectable\ Velocity = \frac{Speed\ of\ Light}{4*f_{RF}*t_{chirp}}\dots\dots\dots\dots(5)$$

$$Velocity\ Resolution = \frac{Speed\ of\ Light}{2*f_{RF}*t_{frame}} = \frac{Speed\ of\ Light}{2*f_{RF}*N*t_{chirp}}\dots\dots\dots(6)$$

where $f_{RF}$ is the frequency of operation (between 76 and 81 GHz for automotive radar applications), $t_{chirp}$ is the time taken for 1 chirp, $t_{frame}$ is the time taken for 1 frame and N is the number of chirps per frame. The equations described above show how different chirp characteristics can affect the overall radar detection performance, although those familiar in the field will appreciate that other parameters such as the chirp rise time and the idle time between chirps must be considered. Furthermore, it will be appreciated that although a longer chirp time and frame time may be advantageous, this will in effect slow the detection calculations of the radar, resulting in a slower and therefore more dangerous reaction time.

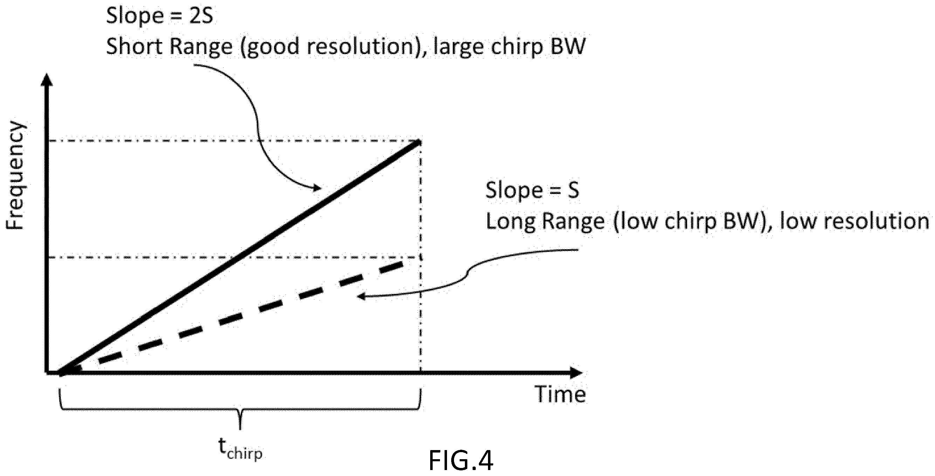

The previous equations highlight the interdependency of different parameters on the overall radar performance, but, there are several other limiting factors. For example, the IF bandwidth is limited and will remain restricted by the limit imposed by the transceiver device. FIG.4 illustrates that the S * $d_{max}$ product is constant, and implies that the slope must decrease for the maximum range to increase for a given chirp time, which is usually set (at a minimum) to ensure that the maximum velocity is obtained.

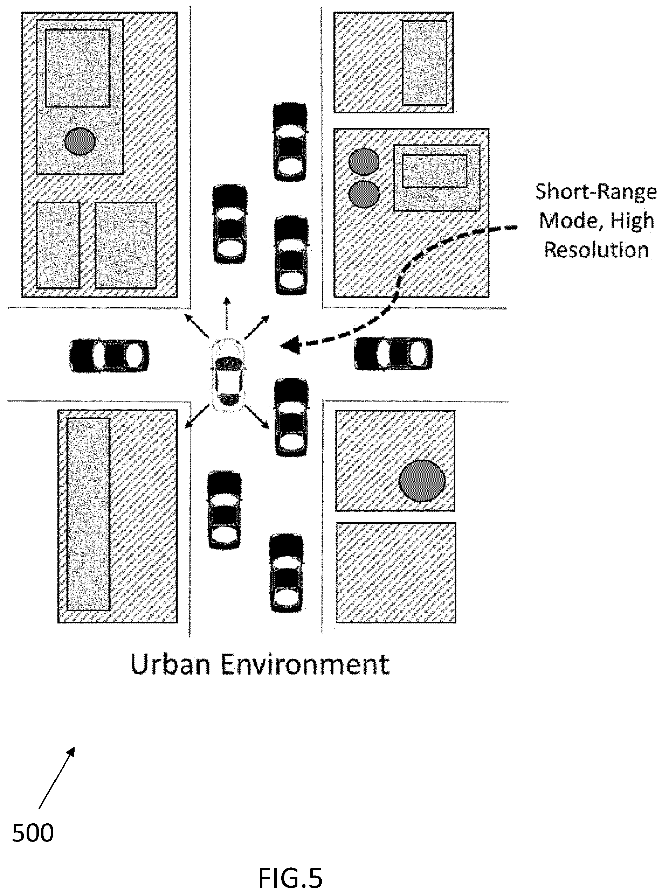

FIG.5 shows the situation where an automotive radar is installed on a vehicle in an urban environment 500. Examples of the vehicle, include, but are not limited to a car, a van, a truck, an electric scooter, an electric bike, and the like. In this scenario, where the detection scene is much more detailed that others, many objects appear near to the host vehicle. These can include dynamic, or moving, objects such as other vehicles or pedestrians, and static, or stationary, objects such as parked vehicles and buildings. Such an environment is particularly challenging for a radar configured in a long-range mode (with a large (or poor) range resolution), to determine the position of objects and display them accurately, but is well suited to a radar configured in short-range mode. In the urban environment 500, speeds in excess of 50 kph are unlikely and probably illegal.

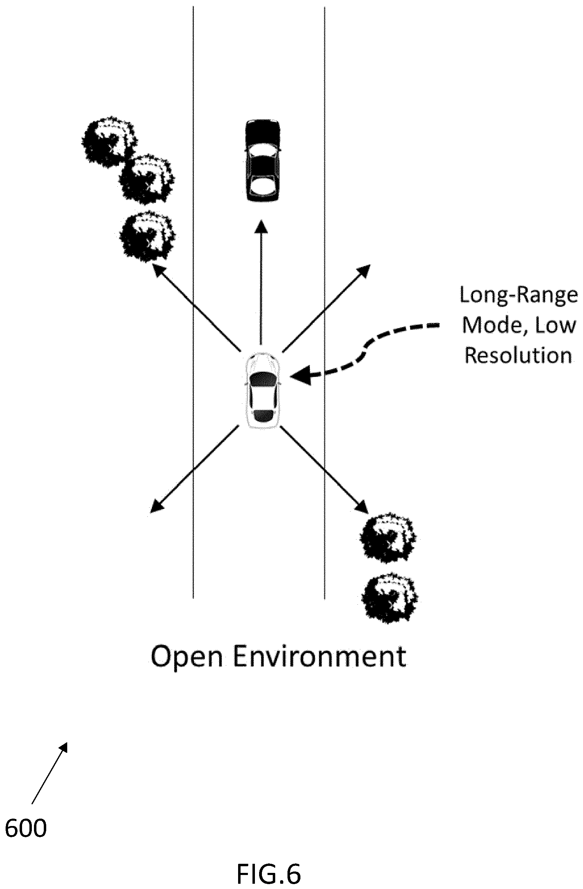

FIG.6 shows the contrary scene of an open or 'country' environment 600. Here objects are less cluttered and widely spaced, and this scene is best suited for an automotive radar configured in long-range mode which can detect these objects at much longer distances than those detected by a radar operating in a short-range configuration. Although the proximity of nearby objects and therefore the scene gives valuable information about which mode the radar should operate in, most information is gained from the speed of the host vehicle. The speeds in excess of 120 kph may be possible in the open environment 600.

Also, it is well known that stopping distances are dependent on speed and therefore, as a minimum, the radar range should cover the minimum stopping distance for the speed the host vehicle is travelling at. As typical stopping distances for different speeds increase in wet conditions when compared to dry conditions, it is important to consider the worst-case situation. Typical stopping distances are shown in the table below:

Table I

| Vehicle Speed | 1.5 s Thinking Distance | Overall Minimum Stopping Distance (dry) | Overall Minimum Stopping Distance (wet) |
| --- | --- | --- | --- |
| 40 kph | 17 m | 26 m | 30 m |
| 50 kph | 21 m | 35 m | 41 m |
| 80 kph | 33 m | 69 m | 85 m |
| 100 kph | 42 m | 98 m | 122 m |
| 120 kph | 50 m | 131 m | 166 m |

These distances are based on a thinking time of 1.5 s, although it is widely regarded that this should be doubled (or 3s should be used) to take account of reaction times as well. Thus, it is recognised that a radar operating in a short-range configuration, with a maximum detection range of less than 100 m is not applicable for safety applications when travelling at speeds in excess of 80 kph.

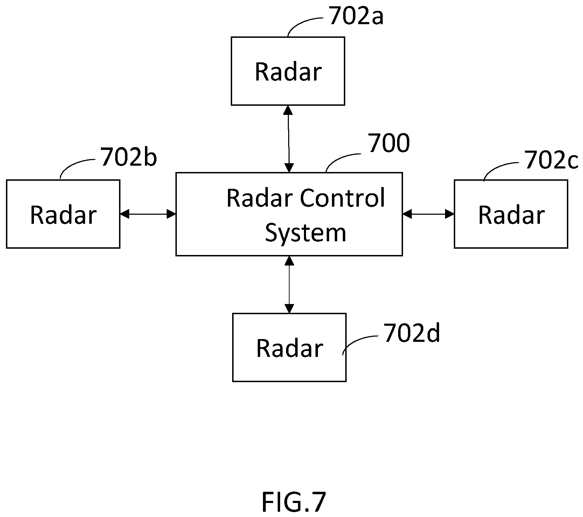

FIG.7 illustrates a radar control system 700 communicatively coupled to first through fourth automotive radars 702a to 702d, for dynamically configuring radar detection range and range resolution of each of the automotive radars 702a to 702d, based on the velocity of host vehicle and a distance from the detected object. The automotive radars 702a till 702d may be installed on the host vehicle in a manner similar to that shown in FIG. 1.

In the context of the present invention, each of the automotive radars 702a to 702d is a millimetre wave radar installed in the vehicle. The millimetre wave radar refers to radar of the wavelengths of 1~10 mm and frequencies of 30~300 GHz. Due to excellent penetration under harsh weather conditions, such as heavy fog or heavy rain, millimetre wave radar has been widely used in the Internet of Vehicles and advanced driver assistance systems (ADAS) to detect objects that are difficult to capture under the influence of distance or environmental factors. This radar plays a crucial role in helping drivers maintaining safe distances.

Each automotive radar 702a to 702d includes one or more millimetre wave transmitters and receivers, or transceiver, a plurality of antenna elements, containing at least one transmit or receive element. Further, each automotive radar may include 'on the edge' processing capability with embedded software control. Also, the RF system design of each radar is such that it is configured to perform long range detection (i.e., enough transmit power, transmit and receive antenna gain, low noise figure etc.) as well as short range detection (wide frequency band) with acceptable range and velocity resolution within the regulated frequency bands.

There exist radars with different settings of operational mode for long range, medium range and short range such as the Veoneer multi-mode radar and the Calterah's automotive multi-mode mmWave radar reference design. Both of these require prior range mode settings, but can change modes depending on the detected object's tracked range only. However, none of them take into account of the host vehicle speed or can change settings other than at a few distinct detected ranges.

The radar control system 700 relates to a computational element that is operable to instantaneously change the settings of one or more transmitters and transceivers of the automotive radars 702a to 702d. The radar control system 700 includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. The radar control system 700 runs an algorithm for dynamically configuring radar detection range and range resolution of each of the automotive radars 702a to 702d based on the velocity of host vehicle. The algorithm output method may include a sliding scale-based function (rather than a lookup table), where the settings of each automotive radar 702a to 702d are changed instantaneously depending on the instantaneous change in velocity of the host vehicle and a distance d from the detected object. For example, the range resolution (R) may be constantly changed in response to the velocity (V) of the host vehicle, as well as based on a range d of the detected object, such that

$$R = f(V, d)\dots\dots\dots\dots(7)$$

The above-mentioned function therefore allows the range resolution R to constantly adapt to the host vehicle's instantaneous speed V, while taking account of instances of nearby vehicles while travelling at high speed, such as on busy highways at rush hour. In a further example, if the host vehicle travels slowly in an uncongested situation such as an unbusy highway with few radar detections observed, then the radar control system 700 may periodically change the settings of an automotive radar to detect a longer range rather than the short range that the vehicle's speed would indicate. In this case, while priority is still maintained to a proximity around the host vehicle, scans are periodically performed at longer distances to check that objects are not approaching the host vehicle at high velocity.

In another embodiment of the present invention, the algorithm may include other types of artificial intelligence-based methods to adaptively change settings of each automotive radar 702a to 702d based on the velocity of the host vehicle or the distance from nearby objects as described previously. The machine learning may be applied to refine the range /mode decision making further, by application of measured data and user feedback into a neural network (or any other appropriate type of machine learning algorithm).

In an embodiment of the present invention, the radar control system 700 uses a lookup table to calculate detection ranges based on the speed of the host vehicle and the safe stopping distance for that speed. An example of such lookup table is Table II.

For a typically fixed number of samples per chirp, and chirps per frame, the detection range and range resolution of each radar may be adjusted according to the following table.

Table II

| Vehicle Speed | Max. Range (m) | Range resolution (m) |
|---|---|---|
| < 60 kph | 54 | 0.11 |
| 60 - 100 kph | 123 | 0.24 |
| > 100 kph | 300 | 0.59 |

Thereafter, the radar control system 700 detects a speed/velocity of the host vehicle from radar detections of static or stationary objects. When detections from static or stationary objects are used, the speed of the vehicle may be determined from their detected relative velocities. Here, the relative velocity of these objects appears to be 'travelling towards' the host vehicle, or in vector terms, as travelling at a negative speed. The vehicle would be travelling at a positive speed of the same magnitude, or in the opposite direction to that determined from the detections, and by knowing this, the host vehicle speed may be determined. It is also recognised that for safety reasons, changes from one setting to the next (or previous) do not occur during instances of quick acceleration or deceleration. The effect of tracking the path of objects can additionally be incorporated by a second lookup table similar to that of previously reported examples, with the tables' priorities chosen by the user. An example of such a table is shown in Table III:

Table III

| Detected Object Range | Range resolution (m) |
|---|---|
| < 50 m | 0.11 |
| < 100 m | 0.24 |
| > 100 m | 0.59 |

In another embodiment of the present invention, the speed of the vehicle may be determined from other means such as an odometer or a reading from the vehicle speed sensor (VSS) on the engine control module (ECM) of the vehicle. This reduces processing time, so a quicker change in the radar settings can be made.

The radar control system 700 sets a range resolution and a detection range of each automotive radar 702a to 702d based on the detected velocity, object ranges and lookup tables. The radar control system 700 adjusts the transmitter or transceiver settings of each of the automotive radars 702a to 702d according to the travelling speed of the unit wherein the maximum detection range is reduced, and the range resolution value is increased when the travelling speed is low, while the maximum detection range is maximized, and the range resolution value is decreased when the travelling speed is high when close objects are not detected. The radar control system additionally decides if the range resolution should be further refined or relaxed depending on the proximity of nearby tracked objects or vehicles.

Considering the example of Table II above, the radar control system 700 sets each automotive radar 702a to 702d on the host vehicle for short range mode when the vehicle travels at speeds less than 60 kph, sets each automotive radar 702a to 702d on the host vehicle for medium range mode, when the vehicle travels between 60 and 100 kph, and sets each automotive radar 702a to 702d on the host vehicle for long range mode, when the vehicle travels at speeds in excess of 100 kph.

It would be apparent to one of ordinary skill in the art, that the automotive radars 702a to 702d may be set to less than or more than three aforementioned range modes. In a first example, in the urban environment 500, i.e., when the host vehicle travels slowly, the radar control system 700 sets the resolution of each automotive radar to the highest value to accurately determine the distance to the detected object and reduces the maximum detection range of each automotive radar, as the reaction time for the driver is unimpeded in the urban environment 500.

In a second example, in the open environment 600, i.e., when the host vehicle travels faster, the radar control system 700 reduces the range resolution, and increases the maximum detection range of each automotive radar 702a to 702d, as the detection range is deemed more important than the range resolution in the open environment 600 to ensure that that the driver has enough time to react when travelling at a high speed.

While the explanation for examples 500, 600 do not go into detail regarding the implementation of the range functionality of equation (7), it will be acknowledged by those familiar in the art that the previous examples for this can be applied here.

The radar control system 700 further employs self-learning capability based on user feedback through the application of neural networks, for making refinements to Tables II and III or equation (7). By employing user case feedback, the radar control system 700 can vary the transmitter or transceiver control settings of each of the automotive radars 702a to 702d based on real life user experiences allowing the radar control system 700 make the settings more applicable and worthwhile, and ultimately making the driving experience safer.

By considering the host vehicle velocity in addition to object tracking, the radar detections now provide more detail and higher resolution in areas where more objects generally occur, but at less range. Similarly, radar detections occur for longer ranges in areas where objects are sparser, but at a lower resolution. This introduces an indirect form of driver feedback to the radar system, where, by driving faster, the driver has perceived the risk of danger to be reduced. In both scenarios, the objects are therefore detected at an appropriate range to allow the driver to have time to react to the situation based on this indirect feedback. Thus, the case of travelling at low speeds with a long-range radar and ultimately 'ignoring' objects that have been detected for a relatively long time, is removed.

In the specification the terms "comprise, comprises, comprised and comprising" or any variation thereof and the terms include, includes, included and including" or any variation thereof are considered to be totally interchangeable, and they should all be afforded the widest possible interpretation and vice versa.

The invention is not limited to the embodiments hereinbefore described but may be varied in both construction and detail.

**Claims**

1. A radar control system comprising:
   a processor configured to be operably coupled to one or more automotive radars for dynamically configuring radar detection range and range resolution of each automotive radar based on a velocity of corresponding host vehicle and a distance from a detected object, wherein each automotive radar is configured to perform long range detection along with short range detection with desired range and velocity resolution within regulated frequency bands.

2. The radar control system as claimed in claim 1, where the range resolution (R) of an automotive radar is constantly changed in response to the velocity (V) of the host vehicle, and a distance d from the detected object based on the equation

$$R = f(V, d)$$

3. The radar control system as claimed in claim 1, wherein the processor is further configured to:

   generate a lookup table by calculating detection ranges based on one or more velocities of the host vehicle and safe stopping distances for corresponding one or more velocities;
   detect a velocity of the host vehicle; and

set a range resolution and a detection range of each automotive radar based on the detected velocity and the lookup table.

4. The radar control system as claimed in any preceding claim, wherein each automotive radar is a millimetre wave radar, and includes one or more millimetre wave transmitters and receivers, a plurality of antenna elements, each containing at least one transmit or receive element.

5. The radar control system as claimed in any preceding claim, wherein the processor is configured to set each automotive radar on the host vehicle for short range mode when the host vehicle travels at a speed less than a first speed, set each automotive radar for medium range mode, when the vehicle travels between first and second speeds, and set each automotive radar for long range mode, when the vehicle travels at a speed greater than the second speed.

6. The radar control system as claimed in any preceding claim, wherein the processor is configured to reduce a maximum detection range and increase a range resolution of each automotive radar, when the host vehicle travels slowly in a congested environment.

7. The radar control system as claimed in any preceding claim, wherein the processor is configured to increase a maximum detection range and reduce a range resolution of each automotive radar, when the host vehicle travels speedily in an open environment.

8. The radar control system as claimed in any preceding claim, wherein the processor employs a machine learning based neural network for dynamically configuring the radar detection range and range resolution of each automotive radar, and wherein the neural network is dynamically trained based on measured data and user feedback.

9. The radar control system as claimed in any preceding claim, wherein the processor is configured to detect the velocity of the host vehicle from radar detections of static or stationary objects around the host vehicle.

10. The radar control system as claimed in any preceding claim, wherein the processor is configured to receive the velocity of the host vehicle from an odometer, or from a vehicle speed sensor (VSS) on the engine control module (ECM) of the vehicle.

11. A method of operating an automotive radar comprising:
dynamically configuring radar detection range and range resolution of the automotive radar based on a velocity of corresponding host vehicle and a distance from a detected object, wherein the automotive radar is configured to perform long range detection along with short range detection with desired range and velocity resolution within regulated frequency bands.

12. The method as claimed in claim 11 further comprising:

generating a lookup table by calculating detection ranges based on one or more velocities of the host vehicle and safe stopping distances for corresponding one or more velocities;
detecting a velocity of the host vehicle; and
setting a range resolution and a detection range of the automotive radar based on the detected velocity and the lookup table.

13. The method as claimed in claim 11 further comprising setting the automotive radar on the host vehicle for short range mode when the host vehicle travels at a speed less than a first speed, setting the automotive radar for medium range mode, when the vehicle travels between first and second speeds, and setting the automotive radar for long range mode, when the vehicle travels at a speed greater than the second speed.

14. The method as claimed in claim 11 further comprising employing a machine learning based neural network for dynamically configuring radar detection range and range resolution of the automotive radar, and wherein the neural network is dynamically trained based on measured data and user feedback.

15. A non-transitory computer readable medium having stored thereon computer-executable instructions which, when executed by a processor, cause the processor to:
dynamically configure radar detection range and range resolution of the automotive radar based on a velocity of corresponding host vehicle and a distance from a detected object, wherein the automotive radar is configured to perform long range detection along with short range detection with desired range and velocity resolution within regulated frequency bands.

FIG.1

FIG.2

Time

Frequency

$t_{frame}$

$t_{chirp}$

N

3

2

1

Beat Frequency

$S = \dfrac{df}{dt}$

............... Transmitted Chirp

- - - - Received Chirp

FIG.3

Frequency

Time

$t_{chirp}$

Slope = 2S
Short Range (good resolution), large chirp BW

Slope = S
Long Range (low chirp BW), low resolution

FIG.4

Short-Range
Mode, High
Resolution

Urban Environment

500

FIG.5

Long-Range Mode, Low Resolution

Open Environment

600

FIG.6

702a

Radar

702b

Radar

700

Radar Control
System

702c

Radar

Radar

702d

FIG.7

Europäisches
Patentamt

European
Patent Office

Office européen
des brevets

# EUROPEAN SEARCH REPORT

Application Number

EP 22 17 0767

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 214 041 733 U (JIANGXI SENSEFREEDOM TECH CO LTD) 24 August 2021 (2021-08-24) * the whole document * | 1-15 | INV. G01S13/34 G01S13/87 G01S7/41 G01S13/931 G01S13/60 |
| X | US 2019/011547 A1 (HAN QH [US] ET AL) 10 January 2019 (2019-01-10) * paragraphs [0013], [0015] - [0017], [0023], [0059] - [0060], [0067] * | 1-15 | |
| X | WO 2021/003440 A1 (METAWAVE CORP [US]) 7 January 2021 (2021-01-07) * paragraphs [0003], [0019], [0027], [0032], [0036], [0037], [0046] - [0054] * | 1-15 | |

TECHNICAL FIELDS
SEARCHED     (IPC)

G01S

The present search report has been drawn up for all claims

| Place of search | Date of completion of the search | Examiner |
|---|---|---|
| Munich | 17 October 2022 | Lupo, Emanuela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 0767

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2022

| Patent document cited in search report | | Publication date | Patent family member(s) | | Publication date |
|---|---|---|---|---|---|
| CN 214041733 | U | 24-08-2021 | NONE | | |
| US 2019011547 | A1 | 10-01-2019 | NONE | | |
| WO 2021003440 | A1 | 07-01-2021 | CA | 3145740 A1 | 07-01-2021 |
| | | | CN | 114072696 A | 18-02-2022 |
| | | | EP | 3994492 A1 | 11-05-2022 |
| | | | JP | 2022538564 A | 05-09-2022 |
| | | | KR | 20220025755 A | 03-03-2022 |
| | | | US | 2022308204 A1 | 29-09-2022 |
| | | | WO | 2021003440 A1 | 07-01-2021 |

For more details about this annex : see Official Journal of the European Patent Office, No. 12/82

EPO FORM P0459